# EUROPEAN PATENT APPLICATION

(11) **EP 1 928 128 A1**
(43) Date of publication of application: **04.06.2008**
(21) Application number: 06791047.1
(22) Date of filing: 20.09.2006
(51) Int. Cl.: H04L 12/56, H04L 29/06

(54) **A BROADBAND ACCESS SYSTEM AND AN EQUIPMENT THEREOF**

(30) Priority: 20.09.2005 CN 200510037447
(71) Applicant: Huawei Technologies Co., Ltd., Longgang District Shenzhen, Guangdong Province, 518129 (CN)
(72) Inventor: SHENG, Hui, Shenzhen, Guangdong Province 518129 (CN)
(74) Representative: Viering, Jentschura & Partner
(86) International application number: PCT/CN2006/002456
(87) International publication number: WO 2007/033589

(57) **Abstract**

A broadband access system and a broadband access equipment solve the problem of the management complication, the high cost and the low reliability in the present system. The station side equipment in the broadband access system of the present invention includes: a main control unit, a switching network unit, a up interface module, a plurality of optical interface modules and a station side xDSL interface module. The remote side equipment is a small capacity access equipment which needs to be used with the station side equipment and could not be used separately, and the base unit is a remote xDSL interface module which provides a plurality of xDSL interfaces for connecting to the user terminals; the main control unit performs controlling and managing the units of the station side equipment and the remote equipment at the same time. I-Ierein the function and realization of the remote xDSL interface module is same as the station side interface module; a plurality of remote equipments could be cascade connected, and then connects to the station side equipments via one or two up optical fiber interface. By using the present invention, the network structure is simplified, the network stability is improved, the network management complexity is decreased, and the cost of the remote equipment is reduced.

## Description

### Field of the Invention

The present invention relates to broadband access technologies, and more particularly, to a broadband access system and device.

### Background of the Invention

With the prevalence of the construction of broadband access, broadband access service with more bandwidth needs to be provided for more and more customers through twisted pair wire, so as to develop the Triple Play service. Generally, the length of existing twisted pair wire is relatively long (the length of some lines may exceed 3~5km), and a long haul may cause the drop of rate. Therefore, it is difficult to provide prevalent broadband access service with guaranteed broad bandwidth when the broadband access devices are arranged according to the traditional Center Office (CO) mode. Currently, for the remote access users with a long haul, the following solution is generally adopted: a remote access device with medium or small capacity is disposed at a place closer to the user (such as in the cabinet nearest to the user), so that the length of the twisted pair wire between the center office and the user may be shortened effectively (generally within 1000m~1500m). Accordingly, service of broader bandwidth may be provided for the user.

In other words, in order to increase the access bandwidth of a user using the twisted pair wire, the solution adopted in the prior art is as follows: an access device with medium or small capacity is disposed at a place closer to the user at the remote end, and the access device with medium or small capacity may be utilized independently from the control of the CO device.

Since the number of the remote users is relatively small, the capacity of the remote access device is generally small, and in many cases the capacity of the remote access device is not larger than 100 lines. Thus, the centralized access device with large capacity initially located in the CO end turns into a plurality of remote access devices with small capacity. The main issue accompanying such mode includes the following.

(1) In the aspect of network management, the management of the centralized access device with large capacity turns into the management of a plurality of access devices with small capacity distributed at the remote end, which leads to higher work load in the network management. Meanwhile, each of the remote access devices with small capacity needs to occupy a management IP address, which increases the consumption of the IP address resources.

(2) When uplink interfaces of the plurality of access devices with small capacity distributed at the remote end are converged to the CO end, it is necessary to deploy aggregation equipment (generally it is a L2/L3 Switch), which causes complexity of network. Thereby, the burden on CO management is increased, thus the issue of network reliability may be brought about. Furthermore, even the risk of degradation of the quality of service may be brought about, and in addition, the cost of network construction may be increased.

(3) In the aspect of the implementation of the device, although the capacity of the remote access device is small, it still needs to possess most functions of an independent device, which causes the implementation of the software and hardware of the system to be complex. Therefore, the stability of the devices is affected and the implementing cost of the device is increased.

### Summary of the Invention

In view of the above disadvantages exist in the prior art, the issues of complex network management, high cost, low reliability etc. caused by the placement of independent access devices with small capacity at remote end in the prior art are to be resolved by the present invention, so as to simplify networking architecture of the access network, increase the network reliability and reduce the cost of device and complexity of network management.

In order to solve the technical issues described above, there is provided a broadband access system, including a Center Office (CO) device and a plurality of remote devices connected with the CO device, wherein the CO device and the remote devices are all broadband access devices, and a capacity of the remote devices is smaller than that of the CO device;

the CO device comprises: a main control unit, a Switch Fabric unit, a WAN Interface Unit and at least one optical interface;

the main control unit is adapted to control and manage the CO device and the remote devices;

the Switch Fabric unit provides a plurality of FE interfaces or GE interfaces, and implements service switching among these interfaces;

the WAN Interface Unit is connected with the Switch Fabric unit through an FE interface or a GE interface, and the WAN Interface Unit is connected with an upper-layer convergence network;

the optical interface is connected with the Switch Fabric unit through an FE interface or a GE interface, and the optical interface is further connected with each of the remote devices;

the remote devices are connected with the optical interface of the CO device via optical fibers, a remote xDSL Interface Unit is arranged in each of the remote devices, and the remote xDSL Interface Unit provides a plurality of xDSL interfaces for connecting terminal devices on user side.

The technical solution of the system as described hereinafter is an optional technical solution.

The CO device further includes: a CO xDSL Interface Unit providing a plurality of xDSL interfaces; the CO xDSL Interface Unit is connected with the Switch Fabric unit through the FE interface or GE interface, and the CO xDSL Interface Unit is connected with the terminal devices on user side;

the remote xDSL Interface Unit and the CO xDSL Interface Unit are both xDSL Interface Units with the same function and implementing principle.

The main control unit controls the CO xDSL Interface Unit and the remote xDSL Interface Unit based on the same principle and mechanism; the remote devices should be connected with the CO device so as to operate normally, and are not capable of operating independently by connecting with other convergence devices.

Each of the remote xDSL Interface Units provides 16, 24, 32, 48, 64 or 72 xDSL line interfaces.

The remote xDSL Interface Unit is a broadband interface unit of plain old telephone service POTS, asymmetric digital subscriber line ADSL, ADSL2+, Very high speed Digital Subscriber Line VDSL, VDSL2, or SHDSL, or it is a broadband/narrowband mixed interface unit of ADSL2+&POTS, ADSL2+&ISDN, VDSL2&POTS, or VDSL2&ISDN.

In the plurality of remote devices, each remote device is connected to the CO device through an uplink optical fiber interface of the remote device itself, or at least two remote devices cascade with each other through respective cascading interfaces and then are connected to the CO device.

The at least two remote devices cascaded with each other are connected to one of the optical interfaces of the CO device via the uplink optical fiber interface of a first or a last remote device, or are connected to two of the optical interfaces of the CO device via the uplink optical interfaces of the first remote device and the last remote device.

The two uplink optical fiber interfaces of the at least two remote devices cascaded with each other have an active/standby relationship with each other in a 1+1 mode or a 1:1 mode.

The remote devices cascaded with each other are cascaded in a daisy chain mode.

The cascading between the remote devices cascaded with each other is a local cascading between the remote devices located in the same physical place, or a remote cascading between the remote devices located in different physical places.

The present invention further provides a broadband access device located in the CO, which is a CO device connected with remote devices, wherein the CO device includes: a main control unit, a Switch Fabric unit, a WAN Interface Unit and at least one optical interface;

the main control unit is adapted to control and manage the CO device and the remote devices;

the Switch Fabric unit provides a plurality of FE interfaces or GE interfaces, and implements service switching among these interfaces;

the WAN Interface Unit is connected with the Switch Fabric unit through an FE interface or a GE interface, and the CO device is connected with an upper-layer convergence network through the WAN Interface Unit;

the optical interface is connected with the Switch Fabric unit through an FE interface or a GE interface, and the CO device is connected with each of the remote devices through the optical interface.

The technical solution of the CO device as described hereinafter is an optional technical solution.

The CO device further includes: a CO xDSL Interface Unit providing a plurality ofxDSL interfaces; the CO xDSL Interface Unit is connected with the Switch Fabric unit through the FE interface or GE interface, and the CO xDSL Interface Unit is connected with the terminal devices on user side.

The CO xDSL Interface Unit and an xDSL Interface Unit of a remote device have the same function and implementing principle.

The present invention further provides a broadband access device located in remote end, which is a remote device connected with an optical interface of a CO device via an optical fiber, wherein the remote device includes: a remote xDSL Interface Unit providing a plurality of xDSL interfaces, which is adapted to connect with terminal devices on user side, the remote xDSL Interface Unit and the CO xDSL Interface Unit have the same function and implementing principle.

The technical solution of the remote device as described hereinafter is an optional technical solution.

The remote device is connected with the CO device through an uplink fiber interface of the remote device itself, or the remote device and other remote devices are cascaded with each other through respective cascading interfaces, and then the remote devices are connected to the CO device.

The remote devices cascaded with each other are cascaded in a daisy chain mode.

When the above technical solution according to the present invention is adopted, the networking structure of the access network of the operator may be simplified, the network reliability and performance may be increased, and the complexity of network management and the work load for device configuration may be reduced. In addition, the implementing difficulty and implementing cost of a device are reduced effectively.

### Brief Description of the Drawings

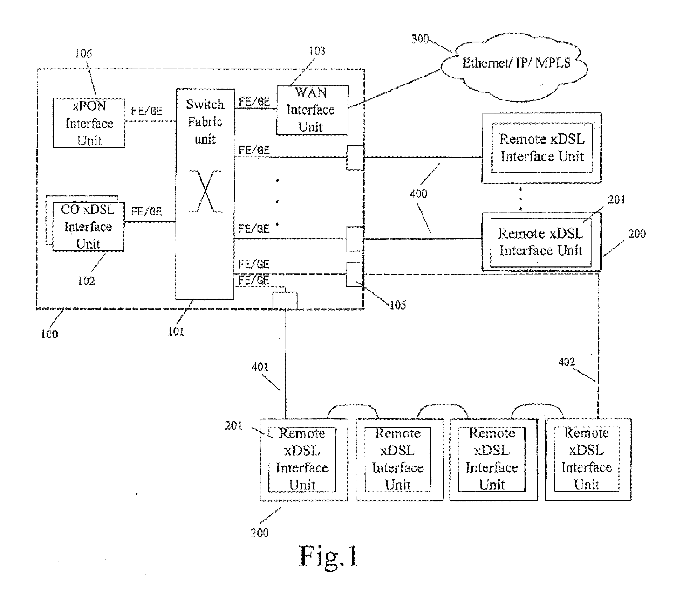

Figure 1 is a block diagram illustrating the principle of the broadband access system according to an embodiment of the present invention.

### Detailed Description of the Embodiments

Figure 1 is a block diagram illustrating the principle of the broadband access system according to a preferred embodiment of the present invention. The broadband access system mainly includes a CO device 100 located in remote CO (dashed line block at top left of Figure 1) and a plurality of remote devices 200 located at remote end.

### 1. CO-Central Office

The Center Office (CO) device 100 in the present embodiment is actually a broadband access device with relatively large capacity. For example, it may be a Digital Subscriber Line Access Multiplexer (DSLAM), a Multi-Service Access Device (MSAN) or a Broadband Loop Carrier (BLC, it is actually also an implementation solution of the MSAN).

The Switch Fabric unit 101 in the CO device 100 is a switching network based on Ethernet, which may provide a plurality of fast Ethernet (FE) interfaces or Gigabit Ethernet (GE) interfaces and implement service switching among these interfaces.

The CO xDSL Interface Unit 102 in the CO device 100 may be a pure broadband interface unit, such as the interface unit of Plain Old Telephone Service (POTS), Asymmetric Digital Subscriber Line (ADSL), ADSL2+, Very high speed Digital Subscriber Line (VDSL), VDSL2, or Symmetric High speed Digital Subscriber Line (SHDSL); or it may be a broadband/narrowband mixed interface unit, such as the interface unit of ADSL2&POTS, ADSL2&ISDN (Integrated Services Digital Network), VDSL2&POTS, and VDSL2&ISDN. The xDSL Interface Unit may provide a plurality of xDSL line interfaces for connecting with the terminal devices on user side, such as modems or telephones. The interface between the CO xDSL Interface Unit 102 and the Switch Fabric unit 101 is an FE interface or a GE interface, and runs a single board software. Besides the xDSI, Interface Unit 102, other interface units may be arranged in the CO device, so as to provide other access methods except for the xDSL. For example, an xPON Interface Unit 106 shown in Figure 1 may be arranged, and the interface between the xPON Interface Unit 106 and the Switch Fabric unit 101 is also an FE interface or a GE interface.

The WAN Interface Unit 103 in the CO device 100 is adapted to implement connection with an upper-layer convergence network (Ethernet/ 1P/ MPLS (Multiprotocol Label Switch)) 300, so as to constitute a corresponding service channel. The interface between the WAN Interface Unit 103 and the Switch Fabric unit 101 is an FE interface or a GE interface.

Further, a main control unit (not shown in Figure 1) is arranged in the CO device 100 for controlling and managing each of the units in the system. The control and management involve the control and management of each of the units in the CO device and the remote devices. In the technical solution of the present invention, each remote device is actually an xDSL Interface Unit of the CO device at remote end, such that the control and management mode currently used in the CO device ma y be adopted by the main control unit to perform control and management for each of the units in the CO device and the remote devices. In the present embodiment, the control and management mode of the main control unit would not be described in detail.

There is further a plurality of optical interfaces 105 arranged in the CO device 100 for connecting with remote devices. These optical interfaces may be the normal FE or GE optical interfaces, or may be the EPON or GPON optical interfaces.

### 2. Remote device

E ach of the remote devices 200 in the present embodiment is actually a broadband access device with small capacity, and the capacity is generally within 100 xDSL line interfaces. The particular device form of a remote device may be a small DSLAM, a small MSAN or a small BLC. Each of the remote devices is connected with the CO device through the uplink optical fiber 400.

It can be seen from the drawing that the basic unit of each remote device 200 is the remote xDSL Interface Unit 201, whose main function and implementation principle are identical to those of the CO xDSL Interface Unit 102. The remote xDSL Interface Unit 201 may provide a plurality of xDSL line interfaces for connecting with the modem or telephone on the user side. Similarly, the remote xDSL Interface Unit may be a pure broadband interface unit, such as the interface unit of ADSL, ADSL2+, VDSL, VDSL2 or G.SHDSL; or it may be a broadband/narrowband mixed interface unit, such as the interface unit of ADSL2&POTS, ADSL2&ISDN, VDSL2&POTS, VDSL2&ISDN.

There is no independent control unit in the remote device 200 of the present embodiment. Instead, a CPU or a control unit similar to or even identical with the CO xDSL Interface Unit 102 is adopted. The processing ability, memory capacity and even the CPU type of the entire remote device 200 may be identical with those of the CO xDSL Interface Unit 102, and the single board software running in the entire remote device 200 may be essentially the same as that running in the CO xDSL Interface Unit 102. The communication between each of the remote devices 200 and the main control unit in the CO device 100 is implemented with in-band channel through the uplink optical interface 105. It can be seen that these remote devices can not be used independently. Instead, the remote devices should cooperate with the above CO devices to implement their functions. The capacity of each of the remote devices may be 16, 24, 32, 48, 64 or 72 xDSL line interfaces.

It can be seen from the Figure 1 that a plurality of the remote devices 200 may be cascaded through the cascading interfaces (the interfaces may particularly be the electrical interfaces, optical interfaces, etc.) in a daisy chain mode. For example, 16 remote devices may be cascaded for implementing the capacity extension or multipoint disposition, so as to save the fiber and interface for interconnection between the remote devices and CO device 100. The cascading may be a local cascading located in the same physical place, or may be a remote cascading located in different physical places.

The real line and dashed line in Figure 1 represent the fiber 401 and 402 respectively. When the cascading of a plurality of remote devices is established, these remote devices may be connected to one of the optical interfaces 105 of the CO device via an uplink optical fiber interface of the first or the last remote device, or may be connected to two of the optical interfaces 105 of the CO device via two uplink optical interfaces of the first and the last remote devices simultaneously. In the latter case, the two uplink optical fiber interfaces may have an active/standby relationship with each other in a 1+1 mode (i.e. only the active interface works, and the standby interface may work only when the active interface fails) or a 1:1 1 mode (i.e. the active and standby interface work simultaneously) based on an internal mechanism.

In a particular implementation, the remote device 200 may include an xDSL Interface Unit identical to the CO xDSL Interface Unit 102 and other auxiliary function units. The auxiliary function units include a power unit, corresponding electromechanical units etc. Power supply for each of the remote units may be implemented locally, or the CO device m ay implement remote power supply for the remote units. Practically a remote xDSL Interface Unit that is independently designed and different from the CO xDSL Interface Unit 102 may be adopted in the remote device.

The remote device 200 in the present embodiment may be a small box-type device. The remote device 200 may be installed in an outdoor cabinet of various forms, or may be installed outdoor directly. For example, the remote device may be installed by means of hanging on the wall, suspension rod etc.

According to the operating principle, the remote device 200 is actually an xDSL Interface Unit of the CO device, which is located at remote end. Although the exterior profiles may be different to some extent, the single board software running in the remote xDSL interface units and in the CO xDSL interface unit are almost the same, and identical service functions are implemented by them. In the network management solution, the status, configuration and management mode of the remote device 200 are the same as those of the xDSL Interface Unit 102 in the CO device 100. The CO device 100 and the plurality of remote devices 200 may constitute an independent system.

## Claims

1. A broadband access system, comprising a Center Office (CO) device and a plurality of remote devices connected with the CO device, wherein the CO device and the remote devices are all broadband access devices, and a capacity of the remote devices is smaller than that of the CO device;
the CO device comprises: a main control unit, a Switch Fabric unit, a Wide Area Network Interface Unit and at least one optical interface;
the main control unit is adapted to control and manage the CO device and the remote devices;
the Switch Fabric unit provides a plurality of fast Ethernet (FE) interfaces or Gigabit Ethernet (GE) interfaces, and implements service switching among these interfaces;
the Wide Area Network Interface Unit is connected with the Switch Fabric unit through an FE interface or a GE interface, and the Wide Area Network Interface Unit is connected with an upper-layer convergence network;
the optical interface is connected with the Switch Fabric unit through an FE interface or a GE interface, and the optical interface is further connected with each of the remote devices; and
the remote devices are connected with the optical interface of the CO device via optical fibers, a remote x Digital Subscriber Line (xDSL) Interface Unit is arranged in each of the remote devices, and the remote xDSL Interface Unit provides a plurality of xDSL interfaces for connecting with terminal devices on user side.

2. The broadband access system according to claim 1, wherein the CO device further comprises: a CO xDSL Interface Unit providing a plurality of xDSL interfaces; the CO xDSL Interface Unit is connected with the Switch Fabric unit through the FE interface or GE interface, and the CO xDSL Interface Unit is connected with the terminal devices on user side; and
the remote xDSL Interface Unit and the CO xDSL Interface Unit are both xDSL Interface Units with the same function and implementing principle.

3. The broadband access system according to claim 2, wherein the main control unit controls the CO xDSL Interface Unit and the remote xDSL Interface Unit based on the same principle and mechanism; the remote devices are connected with the CO device so as to operate normally, and are not capable of operating independently by connecting with other convergence devices.

4. The broadband access system according to claim 3, wherein each of the remote xDSL Interface Units provides 16, 24, 32, 48, 64 or 72 xDSL line interfaces.

5. The broadband access system according to claim 3, wherein the remote xDSL Interface Unit may be Plain Old Telephone Service, Asymmetric Digital Subscriber Line, Asymmetric Digital Subscriber Line 2+, Very high speed Digital Subscriber Line, Very high speed Digital Subscriber Line 2, or Symmetric High speed Digital Subscriber Line interface, it may also be a broadband/narrowband mixed interface unit of Asymmetric Digital Subscriber Line 2+ & Plain Old Telephone Service, Asymmetric Digital Subscriber Line 2+ & Integrated Services Digital Network, Very high speed Digital Subscriber Line 2 & Plain Old Telephone Service, or Very high speed Digital Subscriber Line 2 & Integrated Services Digital Network .

6. The broadband access system according to any one of claim 1-5, wherein, in the plurality of remote devices, each remote device is connected to the CO device through an uplink optical fiber interface of the remote device itself, or at least two remote devices cascade with each other through respective cascading interfaces and then are connected to the CO device.

7. The broadband access system according to claim 6, wherein the at least two remote devices cascaded with each other are connected to one of the optical interfaces of the CO device via the uplink optical fiber interface of a first or a last remote device, or are connected to two of the optical interfaces of the CO device via the uplink optical interfaces of the first remote device and the last remote device.

8. The broadband access system according to claim 6, wherein two uplink optical fiber interfaces of the at least two remote devices cascaded with each other have an active/standby relationship with each other in a 1+1 mode or a 1:1 mode.

9. The broadband access system according to claim 6, wherein the remote devices cascaded with each other are cascaded in a daisy chain mode.

10. The broadband access system according to claim 6, wherein cascading between the remote devices cascaded with each other is a local cascading between the remote devices located in the same physical place, or a remote cascading between the remote devices located in different physical places.

11. A broadband access device located in a Central Office (CO), which is a CO device connected with remote devices, wherein the CO device comprises: a main control unit, a Switch Fabric unit, a Wide Area Network Interface Unit and at least one optical interface;
the main control unit is adapted to control and manage the CO device and the remote devices;
the Switch Fabric unit provides a plurality of FE interfaces or GE interfaces, and implements service switching among these interfaces;
the Wide Area Network Interface Unit is connected with the Switch Fabric unit through an FE interface or a GE interface, and the CO device is connected with an upper-layer convergence network through the Wide Area Network Interface Unit; and
the optical interface is connected with the Switch Fabric unit through an FE interface or a GE interface, and the CO device is connected with each of the remote devices through the optical interface.

12. The broadband access device according to claim 11, wherein the CO device further comprises: a CO xDSL Interface Unit providing a plurality of xDSL interfaces; the CO xDSL Interface Unit is connected with the Switch Fabric unit through an FE interface or a GE interface, and the CO xDSL Interface Unit is connected with terminal devices on user side.

13. The broadband access device according to claim 11, wherein the CO xDSL Interface Unit and xDSL Interface Units of the remote devices have the same function and implementing principle.

14. A broadband access device located at a remote end, which is a remote device connected with an optical interface of a CO device via an optical fiber, wherein the remote device comprises: a remote xDSL Interface Unit providing a plurality of xDSL interfaces, which is adapted to connect with terminal devices on user side, the remote xDSL Interface Unit and a CO xDSL Interface Unit have the same function and implementing principle.

15. The broadband access device according to claim 14, wherein the remote device is connected with the CO device through an uplink fiber interface of the remote device itself, or the remote device and other remote devices are cascaded with each other through respective cascading interfaces, and then the remote devices are connected to the CO device.

16. The broadband access device according to claim 15, wherein the remote devices cascaded with each other are cascaded in a daisy chain mode.
